(19)

Europäisches Patentamt
European Patent Office
Office européen des brevets

(11) **EP 4 071 656 A1**

(12) **EUROPEAN PATENT APPLICATION**

(43) Date of publication:
**12.10.2022 Bulletin 2022/41**

(21) Application number: **22164215.0**

(22) Date of filing: **24.03.2022**

(51) International Patent Classification (IPC):
**G06F 30/20** (2020.01)    **G06F 111/10** (2020.01)

(52) Cooperative Patent Classification (CPC):
**G06F 30/20;** G06F 2111/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021 US 202117210804**

(71) Applicant: **Dassault Systemes Simulia Corp.
Johnston, RI 02919 (US)**

(72) Inventor: **Rao, Kaustubh
Johnston (US)**

(74) Representative: **Bandpay & Greuter
30, rue Notre-Dame des Victoires
75002 Paris (FR)**

(54) **IN-SITU FORMULATION OF CALIBRATED MODELS IN MULTI COMPONENT PHYSICS SIMULATION**

(57)     A calibrated model is created from a physics computation model of a selected component. A setup for a virtual experiment for the selected component is received, and input parameters are defined. An output parameter to be modeled by the calibrated model is selected. The virtual experiment is conducted for the defined input parameters over a predefined range of values for a varied input parameter. Result data from the virtual experiment is recorded and used to produce the calibrated model.

Receive a virtual experiment setup for a component
210

Define a set of input parameters for the virtual experiment.
220

Select an input parameters to vary and a variation range
230

Identify an output variable to be modeled
240

Identify an interface boundary of the component
250

Execute the virtual experiment over the defined inputs
260

Compile recorded results from the virtual experiment into a calibration model
270

200

**FIG. 2**

EP 4 071 656 A1

**Description**

FIELD OF THE INVENTION

The present invention relates to system simulation, and more particularly, is related to modeling characteristics of physical components.

BACKGROUND OF THE INVENTION

A simulation of a system may include an environment where multiple system components are individually simulated, for example, using physics computation methodology, where each simulated component is executed. For example, the simulation may involve modeling the thermal behavior of the system using physics computation models simulating the thermal behavior of each of the individual system components Since each component may interact with one or more of the other components in complex ways, the simulation of the system may be very resource intensive and time consuming. Therefore, there is a need in the industry for a method for efficiently modeling a component for system simulation.

SUMMARY OF THE INVENTION

Embodiments of the present invention provide in-situ formulation of calibrated models in a multi-component physics simulation. Briefly described, the present invention is directed to creating a calibrated model from a physics computation model of a selected component. A setup for a virtual experiment for the selected component is received, and input parameters are defined. An output parameter to be modeled by the calibrated model is selected. The virtual experiment is conducted for the defined input parameters over a predefined range of values for a varied input parameter. Result data from the virtual experiment is recorded and used to produce the calibrated model.
It is proposed a system for creating a calibrated model of a selected component selected from a plurality of physics computation modeled components, comprising: a processor and a memory configured to store non-transitory instructions that, when executed by the processor, perform the steps of: - receiving a setup for a virtual experiment for the selected component using the corresponding physics computation model of the selected component; -defining a plurality of input parameters for the virtual experiment; -selecting a varied input parameter from the plurality of input parameters; - identifying an output parameter to be modeled by the calibrated model; - executing the virtual experiment for the defined input parameters and over a predefined range of values for the varied input parameter; - recording result data from the virtual experiment; and - producing the calibrated model based upon the result data from the virtual experiment, wherein executing the virtual experiment further comprises executing a series of passes each corresponding to one of a plurality of input values of the varied input parameter over the predefined value range, the result data comprises an output value of the output parameter for each pass of the series of passes, and the calibrated model comprises a functional representation of the result data.
The system may comprise one or more of the following:

-   executing the stored non-transitory instructions by the processor further performs the steps of: identifying an interface boundary of the selected component; generating a response surface corresponding to the interface boundary; and identifying a plurality of points on the response surface as output points;
-   converting a discrete representation of the interface boundary to a continuous representation; and providing a modeling function of the continuous representation;
-   the recorded result data comprises output values for each of the plurality of output points for each pass of the series of passes;
-   the virtual experiment further comprises the test setup for the physics computation model of the selected component;
-   the calibrated model comprises a functional representation of the response of the component to varying input parameters as per the virtual experiment;
-   the recorded result data from the virtual experiment into the calibrated model further comprises the step of storing the output value corresponding to a virtual experiment pass for each output point in an array;
-   compiling the recorded result data from the virtual experiment into the calibrated model further comprises the step of fitting each output value corresponding to a virtual experiment pass for each output point to a polynomial curve;
-   selecting a reduced subset of the calibrated model data corresponding to a reduction of at least one of the group consisting of an output parameter, an input parameter, and a predefined value range of the varied input parameter; and removing data from the calibrated model that is not associated with the reduced subset of the calibrated model data.

It is also proposed a method creating a calibrated model of a selected component selected from a plurality of physics computation modeled components, comprising the steps of: - receiving a setup for a virtual experiment for the selected component using the corresponding physics computation model of the selected component; - defining a plurality of input parameters for the virtual experiment; - selecting a varied input parameter from the plurality of input parameters; - identifying an output parameter to be modeled by the calibrated model; - executing the virtual experiment for the defined input parameters and over a predefined range of values for the varied input parameter; - recording result data from the virtual experiment; and producing the calibrated model based upon the result data from the virtual experiment, wherein executing the virtual experiment further comprises executing a series of passes each corresponding to one of a plurality of input values of the varied input parameter over the predefined value range, the result data comprises an output value of the output parameter for each pass of the series of passes, and the calibrated model comprises a functional representation of the result data.

The method may comprise one or more of the following:

- identifying an interface boundary of the selected component; generating a response surface corresponding to the interface boundary; and identifying a plurality of points on the response surface as output points;
- producing the calibrated model further comprises the steps of: converting a discrete representation of the interface boundary to a continuous representation; and providing a modeling function of the continuous representation;
- the recorded result data comprises output values for each of the plurality of output points for each pass of the series of passes;
- the step of replacing the physics computation model of the selected component with the calibrated model;
- the virtual experiment further comprises the test setup for the physics computation model of the selected component;
- the calibrated model comprises a functional representation of the response of the component to varying input parameters as per the virtual experiment;
- compiling the recorded result data from the virtual experiment into the calibrated model further comprises the step of storing the output value corresponding to a virtual experiment pass for each output point in an array;
- compiling the recorded result data from the virtual experiment into the calibrated model further comprises the step of fitting each output value corresponding to a virtual experiment pass for each output point to a polynomial curve;
- selecting a reduced subset of the calibrated model data corresponding to a reduction of at least one of the group consisting of an output parameter, an input parameter, and a predefined value range of the varied input parameter; and removing data from the calibrated model that is not associated with the reduced subset of the calibrated model data.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.

FIG. 1A is a schematic diagram depicting a simulation of a system using a plurality of simulated system components.
FIG. 1B is a schematic diagram depicting the simulation of the system of FIG. 1A replacing two simulated system components with corresponding calibrated models.
FIG. 2 is a flowchart of an exemplary embodiment for a method for creating an in-situ calibrated model of a component.
FIG. 3 is a schematic diagram of an example of the FIG. 2 block of executing the virtual experiment.
FIG. 4 is a schematic diagram of an example of the FIG. 2 block of compiling recorded results from the virtual experiment into a calibrated model.
FIG. 5 is a schematic diagram showing the modeling response produced by the calibrated model when a physics computation simulation queries the calibrated model of FIG. 4.
FIG. 6 is a schematic diagram illustrating the structure and construction of the raw data set in a virtual experiment.
FIG. 7 is a schematic diagram depicting an example of a virtual experiment setup for a perforated plate.
FIG. 8A is a diagram showing an example of a virtual experiment setup for a compact heat sink.
FIG. 8B is a diagram showing a side view of FIG. 8A.
FIG. 9 is a schematic diagram illustrating an example of a system for executing functionality of the present invention.

DETAILED DESCRIPTION

The following definitions are useful for interpreting terms applied to features of the embodiments disclosed herein, and are meant only to define elements within the disclosure.

As used in this disclosure, the phrase "calibrated model" may refer to a virtual object that represents the behavior of a real world physical component in a virtual simulation of an environment of the real world physical component. The calibrated model has a multidimensional interface boundary to receive one or more input value and produce one or more output value based on the modeled behavior. The one or more output values are produced without having to perform rigorous iterative computations in real time during the environmental simulation.

As used within this disclosure, a "physics computation model" of a system component is a computer based simulation that is based on derived mathematical expressions modeling the behavior of the system component based on the underlying physical properties of the component. The physical computation model receives parameters that define the structural characteristics (dimensions, materials, etc.) of the component, and when executed, produces outputs using calculations according to how the model responds when subject to various operating and/or environmental conditions.

As used within this disclosure a "virtual experiment" generally refers to the execution of a test setup using a physics computation model of a system component. During a virtual experiment, tests may be run and re-run using different input values to record the corresponding output response of specified outputs. Each run of the test corresponding to a different input is referred to herein as a "pass."

As used within this disclosure a "response surface" refers to an n-dimensional continuous surface that provides a continuous output value for a continuous variation in n-dimensional inputs that have a bounded range. A response surface is constructed from a range of discrete n-dimensional input parameters and the corresponding output parameter.

As used within this disclosure, a "functional mock-up unit (FMU)" refers to an approach used for systems level simulation. Each functional block in a system tries to represent the operation of a component of a system in isolation. This simplified functional representation takes in certain inputs that are evaluated to provide some outputs. The output from an FMU is fed to another FMU as an input or is one of the desired output of the system. Note between functional blocks there is no physics computation, and the functional modeling of each system component is modeled in isolation, the FMU approach cannot effectively capture the complex non-linear effects of system components interacting with one another. In summary an FMU simulation primarily consists of simplified models interacting with other models.

As used within this disclosure, a "reduced order model" (ROM) is a simplified representation of a complex system. This simplified model may be used in FMUs to aid with systems level simulations.

As used within this disclosure, "design of Experiments (DOE)" refers to is a technique where controlled experiments (simulation or real) are carried out for valid combinations of input parameters within a specified range. The outcome of each experiment variant is observed to finally aid in analyzing the effect of each parameter on the system.

Reference will now be made in detail to embodiments of the present invention, examples of which are illustrated in the accompanying drawings. Wherever possible, the same reference numbers are used in the drawings and the description to refer to the same or like parts.

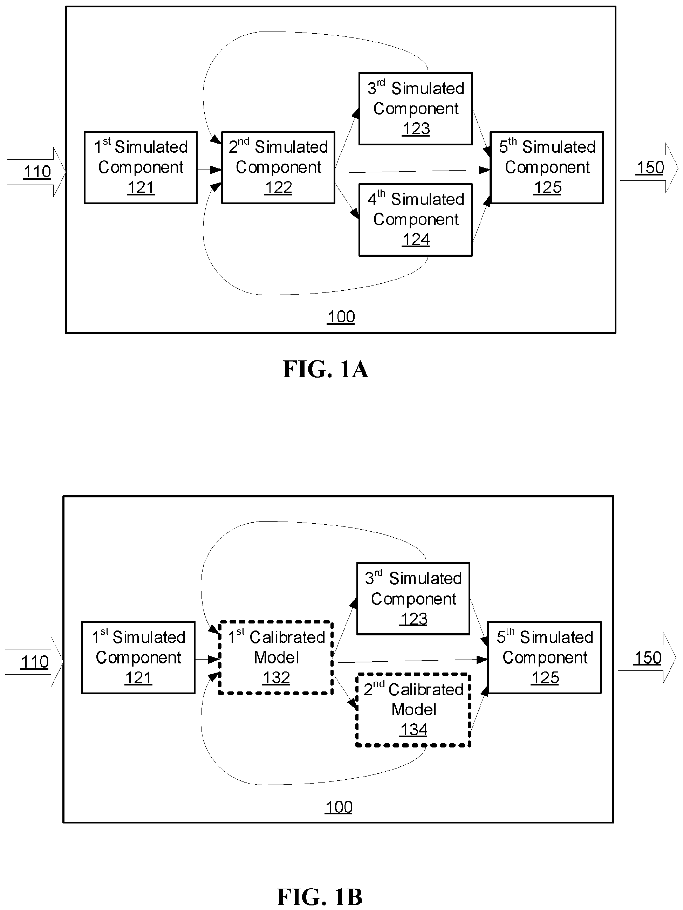

As shown by FIG. 1A, a simulation of a system 100 may involve an environment where multiple system components are individually simulated using physics computation methodology, where a simulation for each modeled component 121-125 is executed during the simulation. For example, the simulation may involve modeling the thermal behavior of the system 100 by using physics computation models simulating the thermal behavior of each of five system components 121-125. Here, the simulation receives an input 110 and produces an output 150. Since each component 121-125 may interact with one or more of the other components in complex ways, the simulation of the system 100 may be extremely resource intensive and time consuming.

As shown in FIG. 1B, instead of executing physic computation model for each component 121-125, the physics computation model for one or more component is replaced with a calibrated model. For example, the second physics computation model 122 is replaced by a first calibrated model 132, and the fourth physics computation model 124 is replaced by a second calibrated model 134. The calibrated models 132, 134 of FIG. 1B operate as black-box replacements for the respective in-line physics computation models 122, 124 of FIG. 1A, accepting the same inputs and providing the same outputs upon execution of the system simulation 100. Each calibrated model 132, 134 is less resource intensive than the corresponding physics computation model 122, 124, for example by at least an order of magnitude.

In general, two types of users interact with a calibrated model 132, 134. As used within this disclosure, a "developer" is a user who develops a knowledge base for the calibrated model 132, 134, consisting of a library of experimental results incorporated by the calibrated models 132, 134 for a corresponding component. A "consumer" is a user who consumes the calibrated model 132, 134 for use in place of a physics computation. It should be noted that in some instances "user" may be used herein to denote that either "consumer" or "developer" would be appropriate.

As used within this disclosure, a "modeled output" refers to an identified parameter of a component whose response to specified input parameters was previously tracked and recorded at a plurality of locations on the component surface during virtual experiments based on a physics computation model of the component. During the virtual experiment, the physics computation model of the component receives inputs and produces and tracks the output values for the identified parameter. A calibrated model of the component replaces a corresponding physics computation model of the model in subsequent system tests and produces the modeled output in response to received inputs.

Embodiments of the present invention are directed to a methodology to in-situ formulate a calibrated model for use in a simulation environment for components having no currently existing model due to their physical characteristics. In an exemplary embodiment of the method a simulated experiment setup for a component manually created by a developer is provided as input to determine the parameters of the simulation. A consumer then selects a range of desired inputs and output parameters to measure for each input. The embodiment produces a calibrated model that may be integrated into a physics simulation.

In contrast, while FMUs may be used in systems level simulations, there is no physics computation only models interacting with other models. For example, consider an FMU representation of a power plant. Many components in a power plant require temperature regulation so as to not exceed a certain temperature. Consider the FMU representation of one such component, were based on the FMU model evaluates that its temperature will reach 100C. This is one of the outputs of the FMU that is fed to the FMU representation of the coolant system in the power plant. The coolant FMU upon receiving this input will evaluate a certain required coolant flow rate and in turn regulate the coolant control valve to achieve this. The FMU models used to represent the operation of these functional blocks are reduced order models, and do not integrate with physics simulation. If say a new component (diverter valve) is needed to be added, however, it disrupts/changes the coolant flow and one needs to know the optimal placement position of this new component, then physics computation is required. FMU models cannot account for such changes. Unlike FMUs, the calibrated models described by the embodiments herein may be integrated with physics simulation. The embodiments provide a method to encapsulate/capture expertise of the developer on a certain class of components by providing a procedural recipe to effectively model the component. This is done by creating virtual experiment setups that can be archived into a library. For example, a developer may design a virtual experiment to extract the effective thermal conductivity of a component (for example, heat sinks). Executing the virtual experiment with the simulated component produces results incorporated into a calibrated model response surface that models the behavior of the modeled component under a range of various operational, environmental, geometrical conditions.

Under the embodiments, the developer generates a knowledge base for new types of components. (e.g., a new type of secondary e-cooling component that is not a heat sink, fan, plate, pipe, etc.). For the developer, the embodiments provide a testing ground (virtual experiment) to observe the response of the component to varying input parameters (defined below) in a controlled manner. The virtual experiment allows a consumer to integrate data provided by a manufacturer of the component (limited experiments run by the manufacturer) along with physics computation. The virtual experiment can link to external parameters such an external FMU type system, or some external functional dependence of some parameters.

The developer may develop a library of such testing grounds for a class of components (e.g., component type: heat sinks) and archive the experimental setup. The archived experimental setups may be used as a template for future VEs with important parameters defined for use, for example which quantities to measure. For traditional or typical variations of the component and their input parameter ranges, the developer can also archive a library of calibrated models as well. For custom or non-standard components, the user proceeds to obtain the calibrated model for a class of components (heat sinks) and adds to the archive of calibrated models. Thus, the user archives the experimental setups created by the developer or consumer for reuse and also archives the calibrated models.

In scenarios when a very specialized component is required and the calibrated model may not have been generated for such an item, a consumer may resort to using the archived virtual experimental setup in-situ and run a subset of input parameter variations and produce a limited range calibrated model to then integrate into the system physics simulations.

An objective of the virtual experiment is to capture the response of a component in isolation to varying input parameters in a controlled manner. While a component may exhibit several kinds of responses, typically the virtual experiment aims to capture the response relevant to the effect of the component on a solution being modeled. For example, while a perforated plate may be heated with increasing temperature, the virtual experiment may only capture the response of the plate with respect to pressure drop.

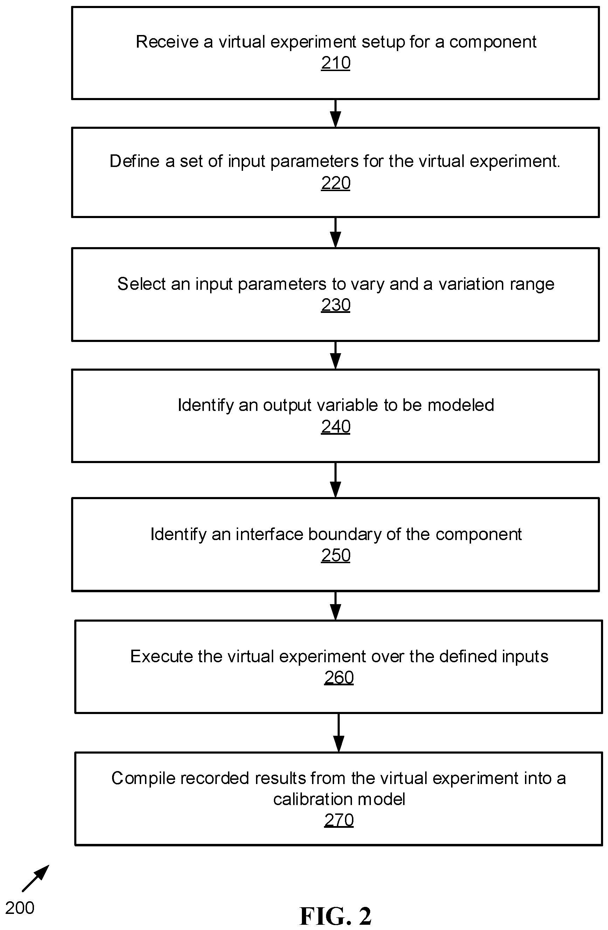

FIG. 2 is a flowchart 200 of an exemplary embodiment for a method for creating an in-situ calibrated model of a component. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

A consumer receives a virtual experiment setup for a selected component, as shown by block 210, for example, a virtual experiment set up for the component created by a developer. The consumer defines a set of input parameters for the virtual experiment, as shown by block 220. Examples of input parameters include operational parameters, environmental parameters, and geometric parameters, among other parameters. In the context of a VE for a fan component, exemplary operational parameters may include the rotations per minute (RPM) of the fan and the fan vent opening angle with respect to a fan input. Exemplary geometric parameters may include a fan blade lead angle, a number of fan blades, and a hub radius, among others. Exemplary environmental parameters include ambient air flow, ambient temperature, and pressure, among others. Upon receiving the component and the choice of virtual experiment some aspects of the input and/or its range can be deduced by the system conducting the virtual experiment, for example, geometric parameters and the enclosing interface boundary. The user may then decide to include these parameters by setting their range of variation, or to ignore them.

One or more input parameters may be selected for testing over a range of values, as shown by block 230. For example, the virtual experiment may be set up to be repeated over a range of fan RPM values. One or more output variable is identified, as shown by block 240. The value of the output variable is recorded during the VE. For example, for a VE modeling a perforated plate the identified modeled output variable may be the pressure drop across the plate thickness. In case of a heat sink the modeled output variable may be an effective thermal conductivity for the heat sink. An interface boundary is identified for the selected component, as shown by block 250. The interface boundary may be the component footprint in a physics simulation or if needed can be user specified. The output variable value is recorded at multiple points on the component interface boundary. Typically, the CAD geometry of the component is automatically detected upon import into the simulation environment.

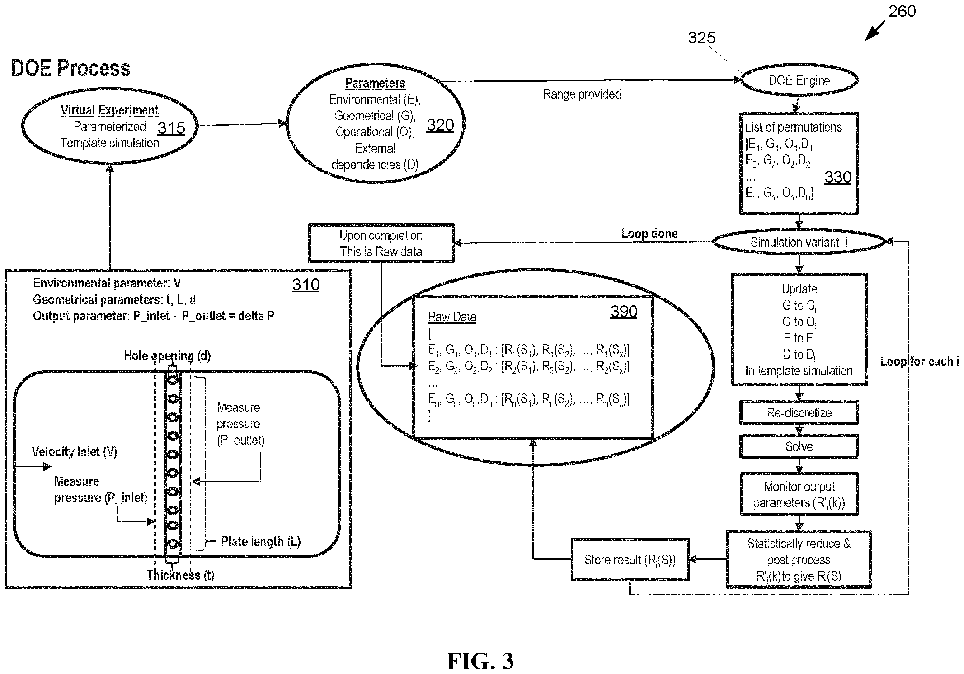

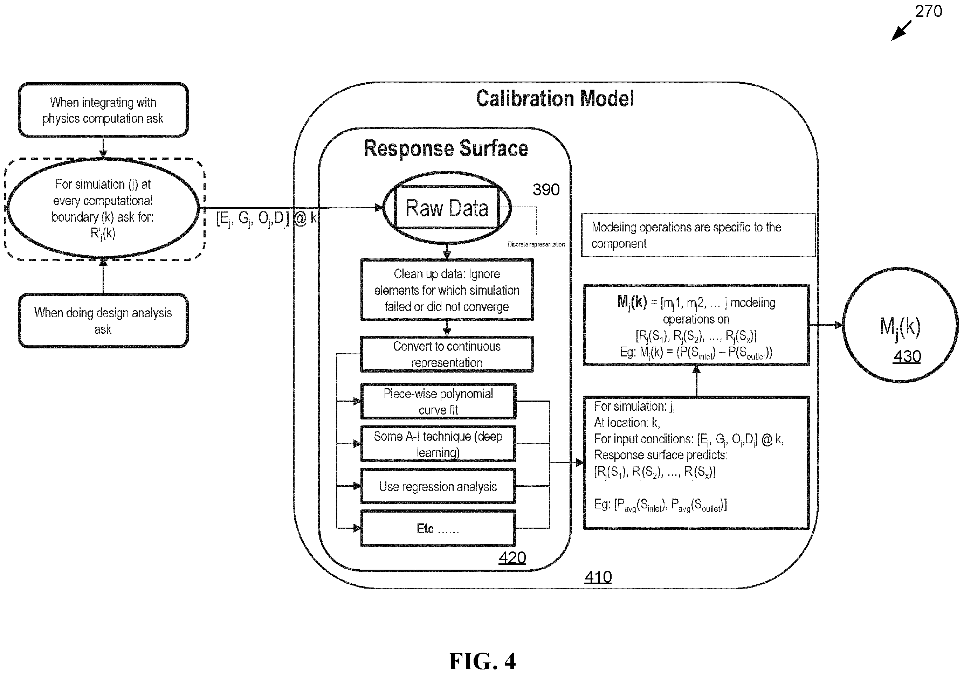

The virtual experiment is conducted, as shown by block 260. The VE may be repeated to record outputs for inputs parameter identified with variable ranges. The execution of the VE is described in further detail below, with reference to FIG. 3. The results of the VE are compiled into a calibrated model as shown by block 270, for example by converting a discrete representation of the interface boundary (response surface) to a continuous representation by combining raw data with one or more interpolating techniques (such as usage of polynomial, AI, regression, etc.), and provide a modeling function M = [m1, m2, ...] as described in further detail below with reference to FIG. 4.

While, in general, the execution of a VE is known to a person having skill in the art, a specific example of execution via DOE engine that employs an iterative and discretized numerical scheme to solve simulations is provided here, illustrated by FIG. 3 for the specific example of a perforated plate. Alternative embodiments may execute a VE in other ways, for example, using an AI based approach, and/or an iterative, discretized numerical scheme to solve the physics equations, as opposed to using meshless methods or Physics informed neural nets to solve the physics. Using DOE methodology to run a series of virtual experiments, a physics computation simulation is performed for each variant of input parameter. As noted above, a developer provides a template 310 for an experiment for the selected component, here a perforated plate. The template 310 may be tailored to a specific virtual experiment 315 by setting input parameters 320 of the experiment. Here, each simulation variant is indexed by "i" and is characterized by the set of input parameters [ $E_i$, $O_i$, $G_i$, $D_i$ ], where $E_i$, $O_i$, $G_i$, $D_i$ and $R_i$ respectively indicate the i-th variant of the environmental, operational, geometric, and external dependency parameters. Each of these parameters in turn is a set/array of inputs, for example, the environmental parameters $E_i$ represents an array $E_i$ = [e1$_i$, e2$_i$......], and likewise for parameters $O_i$, $G_i$, and $D_i$.

After the scope of the VE has been defined, a DOE engine (program) 325 launches several physics computational simulations while logging the specific input parameters for each simulation variant. The simulations may be performed in a distributed or serial fashion, or otherwise performed based on a computer resource acquisition algorithm, familiar to persons having skill in the art. Before entering a computational phase, the following occurs for each simulation variant. The DOE program updates the environmental, operational, external, and geometric parameters to reflect the specific variation of the input parameter. The DOE program discretizes the CAD geometry to produce an appropriate distribution of computational points, for example, as described in U.S. Patent Application No.: 16/874,977, which is incorporated by reference in its entirety herein. For example, distribution of computational points typically follows industry standard pre-loaded heuristics. Here, the interface boundary representing the selected component has been discretized, for example as a segmented surface mesh. The DOE performs the physics computation for each iteration (corresponding to a list of permutations 330). Here, the DOE program monitors and logs the output variables $R'_i(k)$ at every computational point (k) along the now discrete interface boundary, for example pressure: P(k), and/or temperature T(k).

In some cases, based on the component being modeled, the output of the VE maybe statistically reduced over some topological entity (S) to produce a new output set $R_i(S)$. For example, an average pressure over surface (S) = $P_{avg}(S)$. The specific input parameter and the resulting output parameter are logged into memory as a set in a raw data array 390. Each element in the raw data 390 corresponds to a specific variant of the simulation run and corresponding recorded outputs [ $E_i$, $O_i$, $G_i$, $D_i$ : Ri], where $E_i$, $O_i$, $G_i$, $D_i$ and $R_i$ are respectively the i-th variant of the environmental, operational, geometric, external and result/output parameters. The collection of raw data elements is the output of the DOE.

While for the above described example a DOE is the vehicle for receiving the VE template and producing output parameters, other techniques may be used to traverse the various permutations of input parameters and obtain the resulting output parameters, i.e., obtain the raw data. For example, artificial intelligence (AI) based techniques (physics informed neural nets) compute and or predict the component's response to the various input parameters. For example, while DOE may run physics computation simulation for every single combination of input and record the output variable obtained, an AI approach may run physics computation for a subset of input parameter combinations and thereafter predict the $R_i$ for the remaining or closely related combinations.

FIG. 4 is a schematic diagram showing the conversion of the raw data resultant from the VE into a calibrated model. Typically, for a given component class a certain modeling function or method exists. This is determined by a function of the component and the manner in which it affects the simulation of the VE. Here, modeling function is termed as M. The function M depends on spatial coordinates (x,y,z) or (k) in discretized space, input parameter set [E, G, O, D] and output parameters [R].

Once all the raw data set 390 (FIG. 3) has been produced for the user specified range of input parameters the following steps are performed. In some cases, simulations for certain variant of input parameters may have not converged or produced inaccurate results. This may be determined, for example, from the simulation's convergence plots, as described in U.S. Patent No. US 10,303,825 B2 (incorporated by reference herein in its entirety). Such erroneous results are discarded, and not incorporated into to the subsequently described steps. It should be noted that detecting such erroneous simulation runs may be useful to identify any shortcomings of the virtual experimental setup and may thus be a useful feedback to the user (or some automated heuristic algorithm) to refine the simulation.

The filtered raw data set $R_i(S)$ 390 is used to reconstruct a response surface 420 by several techniques such as polynomial curve fitting, regression analysis, A-I techniques, or a combination of these and other pre-existing techniques. These techniques convert the discrete set of data points ($E_i$, $O_i$, $G_i$, $D_i$: $R_i$) into a continuous form (E, O, G, D: R). Representing the data in a continuous manner may be advantageous, since for any input ($E_j$, $O_j$, $G_j$, $D_j$) that does not belong to the input set used to run generate raw data (Ei, Oi, Gi, Di), one can obtain predicted results $R_j$. Thus, a continuous representation, namely the response surface 420 (FIG. 4), is preferred for modeling. A modeling function M (E,O,G,D, R(k)) is based on the component type and function. The continuous representation is used to produce a modeled response for the component.

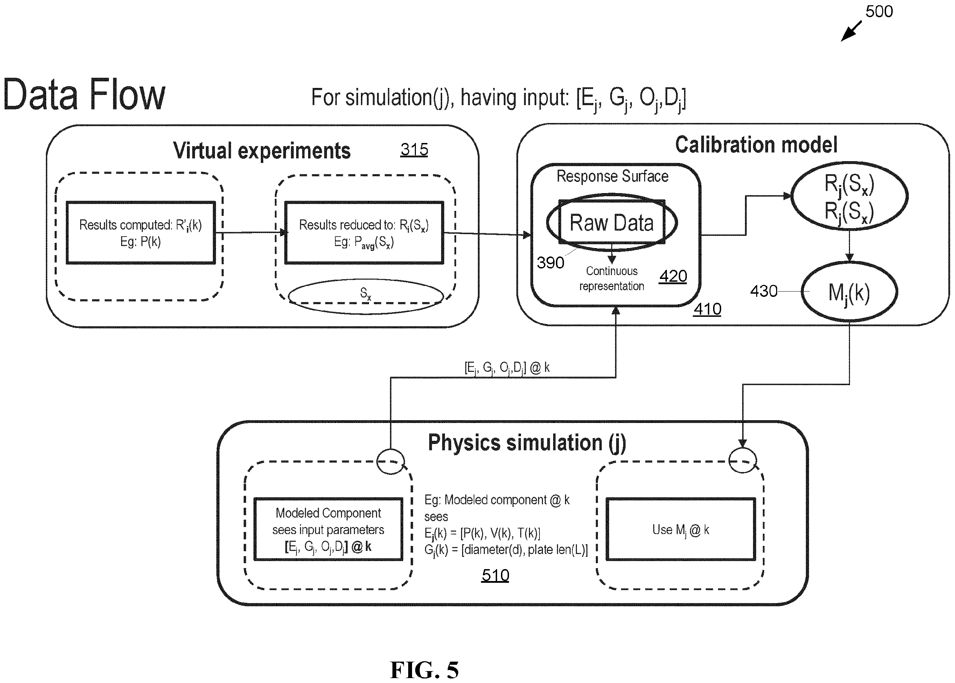

FIG. 5 shows the modeling response 430 produced by the calibrated model 410 when a physics computation simulation 510 queries the calibrated model to produce a response 430. The physics computation simulation 510 provides the input parameter set [$E_j$, $O_j$, $G_j$, $D_j$], the response surface 420 is used to predict an appropriate output parameter [Rj] that would arise from such an input set and the calibrated model 410 provides the modeled response $M_j$ 430 to the simulation. The exemplary embodiments may produce a workflow that archives a library of experimental setups, and modeling functions designed for a various class of component types (plates, fans, heat sinks, heat pipes etc.), and another library to allow for archival of one or several calibrated models for a component class.

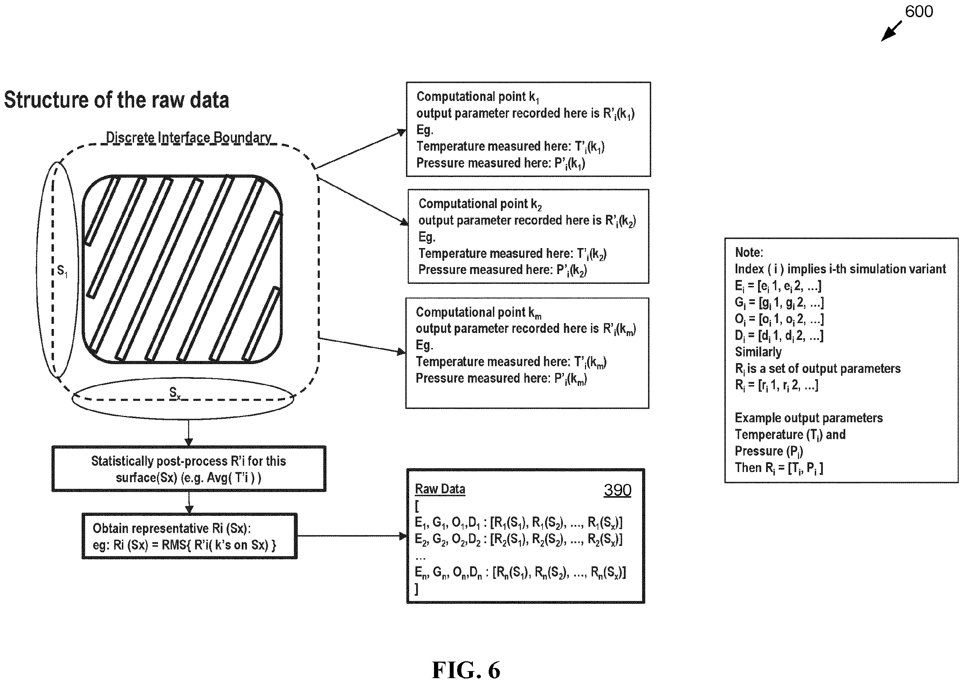

FIG.6 illustrates the structure and construction of the raw data set 390 in a virtual experiment 315. For exemplary purposes, FIG. 6 shows a simulation variant (i) having an input parameter set [Ei, Gi, Oi, Di]. As per the example described previously, each of $E_i$, $G_i$, $O_i$, $D_i$ is in turn an array of parameters for instance: $Ei = [e1_i, e2_i, ..., en_i]$. An example of an array of environmental parameters $E_i$ could be ambient pressure Pi, ambient temperature $T_i$, ambient air flow velocity Vi; thus $E_i = [P_i, T_i, V_i]$. The component boundary ("discrete interface boundary") has been identified. For example, in applications that involve CAD geometry, the footprint/interface boundary may be auto detected, or user specified. When the simulation is discretized, the interface boundary is similarly discretized into a set of k-computational points.

In the virtual experiment 315 (FIG. 3) the physics is computed/predicted (for example, via physics informed neural nets) and output parameters are produced at the computational points along the discretized interface boundary 420. Output parameters: [R'$_i$(k)] are produced, where the single quote " ' " indicates data that exists for each computational point.

Like input parameters, the output parameter set is an array. For example, [R'$_i$ (k)] may be a set of temperature, pressure, or species fraction at each k-computational grid point at the interface boundary. Thus [R'$_i$ (k)] = [T'$_i$(k), P'$_i$(k), phi'i(k)]. The output parameters [R'$_i$ (k)] are statistically reduced along some topological entity S to produce [R$i$(S)]. For example, the parameters pressure and/or temperature can be surface averaged along planar surfaces ($S_1$,$S_2$, .... $S_x$) to produce [ [$R_i(S_1)$], [$R_i(S_2)$], ...., [$R_i (S_x)$] = [ [$T_i(S_1)$, $P_i(S_1)$], [$T_i(S_2)$, $P_i(S_2)$], ...., [$T_i(S_x)$, $P_i(S_x)$].

For another example, temperature may be statistically reduced using a root mean square operator ($T_i(S_x)$= RMS(T'$_i$(k)) for all k on $S_x$) while pressure is merely surface averaged: $P_i(S_x)$ = Average(P'$_i$($S_x$)). However, in some models no such operation need be performed. The set of input parameters [Ei, Gi, Oi, Di] and output parameters [Ri] are stored in an array which represents the raw data 390.

Regarding the inputs and outputs of the above described embodiments, the developer decides the relevant input parameters and their ranges and resolutions. For example, for a fan, the operating range of RPM may vary from 100 to 2000 RPM in steps of 10 rpms. The range for the parameters of the component is typically set according to the expected conditions the component is expected to operate under. The developer chooses how to model the effect of the component, for example, the heat fin may be modeled as an effective conductivity, but alternatively may also be modeled as an effective heat transfer coefficient. Appropriate variables are measured along interface boundary according to the modeling choices. The developer designs the virtual experimental setup so as to obtain a calibrated model that can be integrated into physics computation involving the component under varied environmental, operational & geometric conditions. The input set serves to prepare the virtual experimental setup for a class of components. For example, the above inputs may equate to an experimental setup to model heat fins in general.

In some embodiments, the above described inputs may be automated to some degree by software provider providing a set of pre-determined virtual experiments for each class of component. In the context of e-cooling workflow: for example, the program may be configured to allow the consumer to select a pre-defined virtual experiment for each class of a component.

For example, the developer may select "calibration experiment for heat sinks" and to choose the virtual setup for a heat sink class of components, and then supply the CAD geometry of the heat fin along with the fidelity in the parameter ranges. The footprint of the heat fin may then be determined. The measured output parameters are already pre-setup for measurement at the footprint boundary, as well as the environmental and operational variables. The geometry variables may be determined based upon the CAD geometry. Here, the consumer would then determine the operational ranges and which geometry parameters are relevant. While the examples described above have been directed e-cooling workflow only, the embodiments are not so limited and virtual experiments may be pre-loaded for other types of workflow.

Given the above described inputs, the output variables may be automatically measured at the interface boundary, and output variables for combinations of the input parameters may be measured and/or predicted. For example, DOE techniques may be employed which involve running a physics computation simulation for every input parameter combination. Alternatively, AI techniques may predict output variables for a certain combination of input parameters by observing the measured response to a subset of input parameters. Correlations, curve fitting, response surfaces and other technique capture the above information as the calibrated model. The input set (experimental setup) may be archived for future adaptations.

The resulting calibrated model is a functional representation of the response of the component to varying input parameters. The calibrated model thus obtained integrates into a live physics computation simulation. The calibrated model interacts with the physics computation via the interface boundary. The calibrated model includes a stored representation of the experimental setup (input set). The calibrated model can be stored, for example, as an array of numbers. The array of numbers stores the response surface where each point that constitutes the response surface represents a certain input parameter and the corresponding measured output variable. Along with storing the discrete representation of the response surface, the calibrated model also contains the recipe to convert the response surface into a continuous representation along with the recipe to produce a modeling function M.

The functional representation of the calibrated model is independent of the details of the virtual experiment, the modeling, or the component. For example, a calibrated model having tabular data that interpolates for intermediate points may be stored as an array of numbers such as:

```
[
1: V=1, d=0.5, t = 0.01, ΔP1
2: V=1, d=0.8, t = 0.01, ΔP2
3: V=2, d=0.5, t = 0.01, ΔP3
...
]
```

Thus, each element in the above array represents a virtual experiment run for a specific set of inputs and the measured output. This collection is the discrete representation of the response surface. For a particular simulation when at a certain interface location, the specific input parameter is between the points stored in the array, for example, V=1.5,d=0.65, t=0.01 then data points closest to this may be interpolated for the $\Delta P$. Thus, the discrete representation along with the interpolation function provides a continuous representation of the response surface. It should be noted that this example describes just one of many ways to store these correlations.

Alternatively, calibrated models may represent the correlations via polynomial curves. For example, the measured data may be curve fit by a polynomial and the calibrated model stores the polynomial coefficients (a0, a1, a2, ...)

$$\Delta P = a_0 + a_1 V^2 + a_2 d^2 + a_3 t^2 + a_4 Vd + a_5 Vt + ... \quad (Eq. 1)$$

The developer and consumer may be given several choices how to represent and store the continuous representation of the calibrated model.

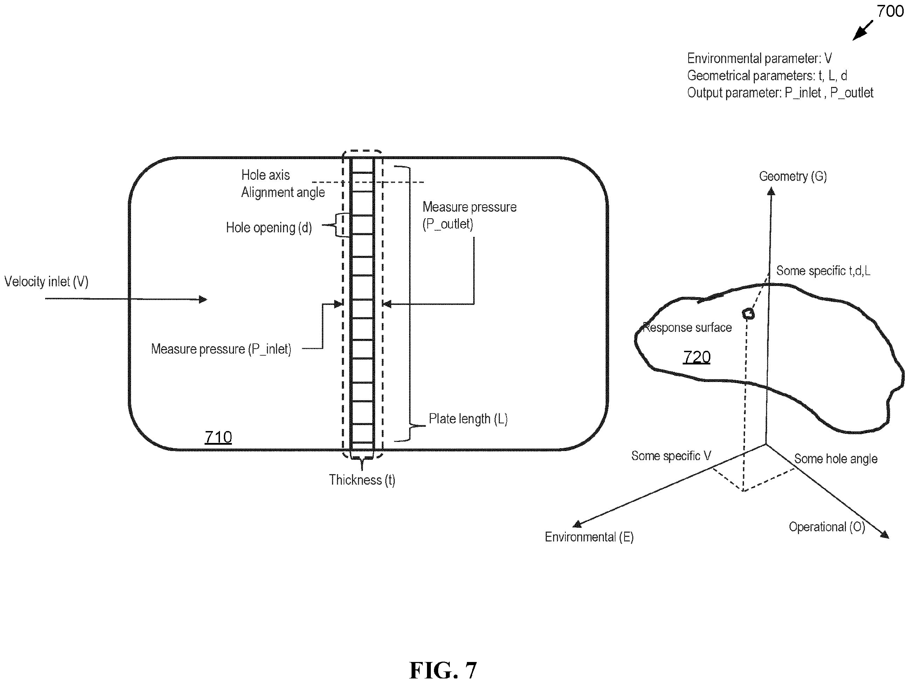

FIG. 7 depicts the following example 700 describing a virtual experiment setup 710 for a perforated plate. Here, a full CAD representation of the perforated plate geometric parameters (d, L, t) is placed in a wind tunnel subjected to environmental parameter (V) and the surface averaged pressure is measured along a plane represented by the dotted lines. Several simulations are run each with a unique combination of (V, t, d, L). For each simulation, the pressure drop across the plate is measured as a function of these input parameters. This produces the correlations between input variables and measured variables on a response surface 720.

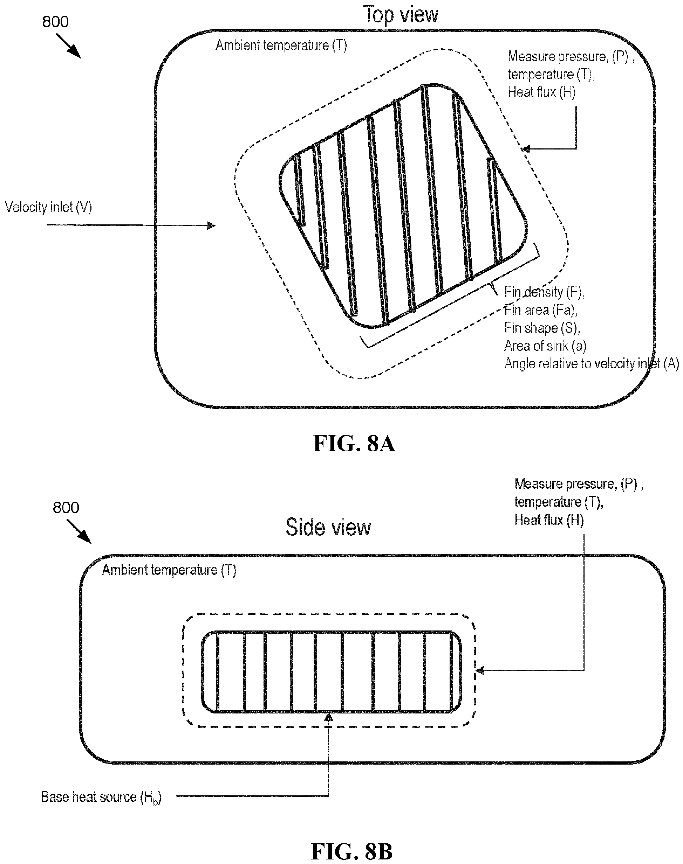

FIGS. 8A-B depict the following example describing a virtual experiment setup for a heat sink 800. Similar to the perforated plate, the virtual experiment here places the full CAD geometric representation of an extruded rectangular fin heat sink in a wind tunnel. The heat sink base heat source, ambient air temperature and the inlet velocity are represented as input parameters.

As with the previous experiment for the perforated plate, here the virtual experiment measures the pressure (P), temperature (T), heat flux (H) along the interface boundary (dotted line). The virtual experiment includes the heat sink geometry and some portion of the surrounding volume to isolate from local effects. The various geometrical parameters (only some of which are illustrated for simplicity) include the fin density, fin area, shape, fin area. The operating parameters are thermal conductivity of the fin material, heat sink heat source input. The environmental parameters are the ambient temperature, the velocity, the relative angle of the velocity with the fin. The measured parameters are heat flux, temperature, pressure at the interface boundary (dotted line).

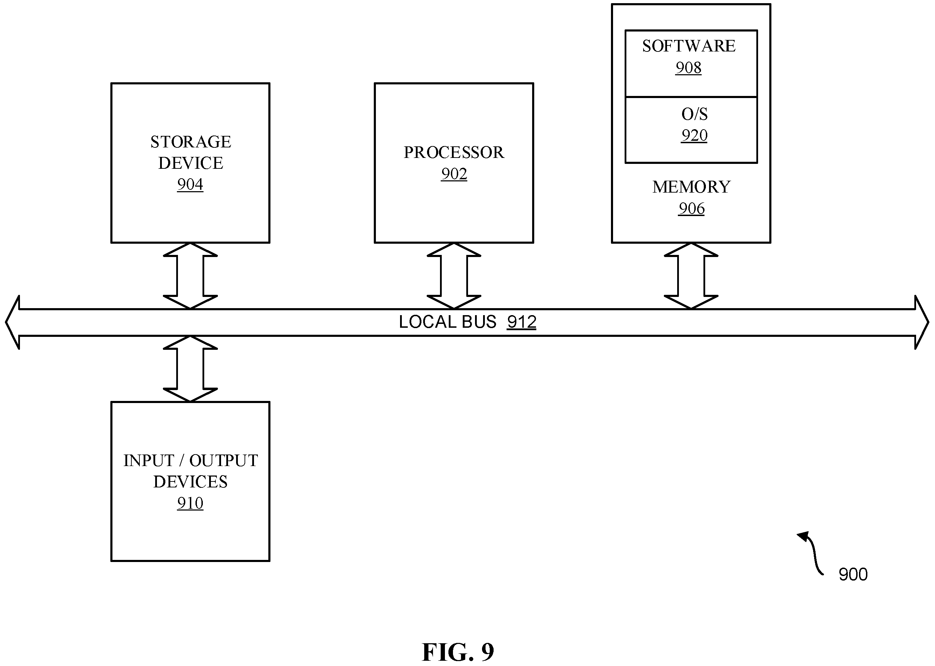

A system for executing the functionality described in detail above may be a computer, an example of which is shown in the schematic diagram of FIG. 9. The system 900 contains a processor 902, a storage device 904, a memory 906 having software 908 stored therein that defines the abovementioned functionality, input, and output (I/O) devices 910 (or peripherals), and a local bus, or local interface 912 allowing for communication within the system 900. The local interface 912 can be, for example but not limited to, one or more buses or other wired or wireless connections, as is known in the art. The local interface 912 may have additional elements, which are omitted for simplicity, such as controllers, buffers (caches), drivers, repeaters, and receivers, to enable communications. Further, the local interface 912 may include address, control, and/or data connections to enable appropriate communications among the aforementioned components.

The processor 902 is a hardware device for executing software, particularly that stored in the memory 906. The processor 902 can be any custom made or commercially available single core or multi-core processor, a central processing unit (CPU), an auxiliary processor among several processors associated with the present system 900, a semiconductor based microprocessor (in the form of a microchip or chip set), a macroprocessor, or generally any device for executing software instructions.

The memory 906 can include any one or combination of volatile memory elements (e.g., random access memory (RAM, such as DRAM, SRAM, SDRAM, *etc.*)) and nonvolatile memory elements (*e.g.*, ROM, hard drive, tape, CDROM, *etc.*). Moreover, the memory 906 may incorporate electronic, magnetic, optical, and/or other types of storage media. Note that the memory 906 can have a distributed architecture, where various components are situated remotely from one another, but can be accessed by the processor 902.

The software 908 defines functionality performed by the system 900, in accordance with the present invention. The software 908 in the memory 906 may include one or more separate programs, each of which contains an ordered listing of executable instructions for implementing logical functions of the system 900, as described below. The memory 906 may contain an operating system (O/S) 920. The operating system essentially controls the execution of programs within the system 900 and provides scheduling, input-output control, file and data management, memory management, and communication control and related services.

The I/O devices 910 may include input devices, for example but not limited to, a keyboard, mouse, scanner, microphone, *etc.* Furthermore, the I/O devices 910 may also include output devices, for example but not limited to, a printer, display, *etc.* Finally, the I/O devices 910 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 900 is in operation, the processor 902 is configured to execute the software 908 stored within the memory 906, to communicate data to and from the memory 906, and to generally control operations of the system 900 pursuant to the software 908, as explained above.

When the functionality of the system 900 is in operation, the processor 902 is configured to execute the software 908 stored within the memory 906, to communicate data to and from the memory 906, and to generally control operations of the system 900 pursuant to the software 908. The operating system 920 is read by the processor 902, perhaps buffered within the processor 902, and then executed.

When the system 900 is implemented in software 908, it should be noted that instructions for implementing the system 900 can be stored on any computer-readable medium for use by or in connection with any computer-related device, system, or method. Such a computer-readable medium may, in some embodiments, correspond to either or both the memory 906 and the storage device 904. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 902 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 900 is implemented in hardware, the system 900 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1.   A method for creating a calibrated model of a selected component selected from a plurality of physics computation modeled components, comprising the steps of:

receiving a setup for a virtual experiment for the selected component using the corresponding physics computation model of the selected component;
defining a plurality of input parameters for the virtual experiment;
selecting a varied input parameter from the plurality of input parameters;
identifying an output parameter to be modeled by the calibrated model;
executing the virtual experiment for the defined input parameters and over a predefined range of values for the varied input parameter;
recording result data from the virtual experiment; and
producing the calibrated model based upon the result data from the virtual experiment,
wherein executing the virtual experiment further comprises executing a series of passes each corresponding to one of a plurality of input values of the varied input parameter over the predefined value range, the result data comprises an output value of the output parameter for each pass of the series of passes, and the calibrated model comprises a functional representation of the result data.

2.   The method of claim 1, further comprising the steps of:

identifying an interface boundary of the selected component;
generating a response surface corresponding to the interface boundary; and
identifying a plurality of points on the response surface as output points.

3.   The method of claim 2, wherein producing the calibrated model further comprises the steps of:

converting a discrete representation of the interface boundary to a continuous representation; and
providing a modeling function of the continuous representation.

4.   The method of claim 2, wherein the recorded result data comprises output values for each of the plurality of output points for each pass of the series of passes.

5. The method of claim 1, further comprising the step of replacing the physics computation model of the selected component with the calibrated model.

6. The method of claim 1, wherein the virtual experiment further comprises the test setup for the physics computation model of the selected component.

7. The method of claim 1, wherein the calibrated model comprises a functional representation of the response of the component to varying input parameters as per the virtual experiment.

8. The method of claim 4, wherein compiling the recorded result data from the virtual experiment into the calibrated model further comprises the step of storing the output value corresponding to a virtual experiment pass for each output point in an array.

9. The method of claim 4, wherein compiling the recorded result data from the virtual experiment into the calibrated model further comprises the step of fitting each output value corresponding to a virtual experiment pass for each output point to a polynomial curve.

10. The method of claim 1, further comprising the steps of:

    selecting a reduced subset of the calibrated model data corresponding to a reduction of at least one of the group consisting of an output parameter, an input parameter, and a predefined value range of the varied input parameter; and
    removing data from the calibrated model that is not associated with the reduced subset of the calibrated model data.

11. A computer program comprising instructions for performing the method of any one of claim 1 to 10.

12. A computer-readable data storage medium having recorded thereon the computer program of claim 11.

13. A computer system comprising a processor coupled to a memory, the memory having recorded thereon the computer program of claim 11.

**FIG. 1A**

**FIG. 1B**

Receive a virtual experiment setup for a component
210

Define a set of input parameters for the virtual experiment.
220

Select an input parameters to vary and a variation range
230

Identify an output variable to be modeled
240

Identify an interface boundary of the component
250

Execute the virtual experiment over the defined inputs
260

Compile recorded results from the virtual experiment into a calibration model
270

200

**FIG. 2**

**DOE Process**

325

Virtual Experiment
Parameterized 315
Template simulation

Parameters
Environmental (E),
Geometrical (G),
Operational (O), 320
External
dependencies (D)

Range provided

DOE Engine

List of permutations
$[E_1, G_1, O_1, D_1$
$E_2, G_2, O_2, D_2$
...
$E_n, G_n, O_n, D_n]$ 330

Upon completion
This is Raw data

Loop done

Simulation variant i

Environmental parameter: V 310
Geometrical parameters: t, L, d
Output parameter: P_inlet – P_outlet = delta P

Hole opening (d)

Measure
pressure
(P_outlet)

Velocity Inlet (V)

Measure
pressure (P_inlet)

Plate length (L)

Thickness (t)

Raw Data 390
[
$E_1, G_1, O_1, D_1 : [R_1(S_1), R_1(S_2), ..., R_1(S_x)]$
$E_2, G_2, O_2, D_2 : [R_2(S_1), R_2(S_2), ..., R_2(S_x)]$
...
$E_n, G_n, O_n, D_n : [R_n(S_1), R_n(S_2), ..., R_n(S_x)]$
]

Update
G to $G_i$
O to $O_i$
E to $E_i$
D to $D_i$
In template simulation

Loop for each i

Re-discretize

Solve

Monitor output
parameters ($R'_i(k)$)

Store result ($R_i(S)$)

Statistically reduce &
post process
$R'_i(k)$ to give $R_i(S)$

EP 4 071 656 A1

**FIG. 3**

**FIG. 4**

# Data Flow

For simulation(j), having input: $[E_j, G_j, O_j, D_j]$

**Virtual experiments** _315_

Results computed: $R'_i(k)$
Eg: $P(k)$

Results reduced to: $R_i(S_x)$
Eg: $P_{avg}(S_x)$

$S_x$

**Calibration model**

Response Surface

Raw Data

390

Continuous representation _420_

_410_

$R_j(S_x)$
$R_j(S_x)$

430 — $M_j(k)$

$[E_j, G_j, O_j, D_j]$ @ k

**Physics simulation (j)**

Modeled Component sees input parameters $[E_j, G_j, O_j, D_j]$ @ **k**

Eg: Modeled component @ k sees
$E_j(k) = [P(k), V(k), T(k)]$
$G_j(k) = [diameter(d), plate len(L)]$

_510_

Use $M_j$ @ k

**FIG. 5**

EP 4 071 656 A1

## Structure of the raw data

**Discrete Interface Boundary**

$S_1$

$S_x$

Computational point $k_1$
output parameter recorded here is $R'_i(k_1)$
Eg.
Temperature measured here: $T'_i(k_1)$
Pressure measured here: $P'_i(k_1)$

Computational point $k_2$
output parameter recorded here is $R'_i(k_2)$
Eg.
Temperature measured here: $T'_i(k_2)$
Pressure measured here: $P'_i(k_2)$

Computational point $k_m$
output parameter recorded here is $R'_i(k_m)$
Eg.
Temperature measured here: $T'_i(k_m)$
Pressure measured here: $P'_i(k_m)$

Statistically post-process R'i for this
surface(Sx) (e.g. Avg( T'i ) )

Obtain representative Ri (Sx):
eg: Ri (Sx) = RMS{ R'i( k's on Sx) }

**Note:**
Index ( i ) implies i-th simulation variant
$E_i = [e_i 1, e_i 2, ...]$
$G_i = [g_i 1, g_i 2, ...]$
$O_i = [o_i 1, o_i 2, ...]$
$D_i = [d_i 1, d_i 2, ...]$
Similarly
$R_i$ is a set of output parameters
$R_i = [r_i 1, r_i 2, ...]$

Example output parameters
Temperature $(T_i)$ and
Pressure $(P_i)$
Then $R_i = [T_i, P_i]$

Raw Data                     390
[
$E_1, G_1, O_1, D_1 : [R_1(S_1), R_1(S_2), ..., R_1(S_x)]$
$E_2, G_2, O_2, D_2 : [R_2(S_1), R_2(S_2), ..., R_2(S_x)]$
...
$E_n, G_n, O_n, D_n : [R_n(S_1), R_n(S_2), ..., R_n(S_x)]$
]

**FIG. 6**

EP 4 071 656 A1

FIG. 7

## Top view

800

Ambient temperature (T)

Measure pressure, (P),
temperature (T),
Heat flux (H)

Velocity inlet (V)

Fin density (F),
Fin area (Fa),
Fin shape (S),
Area of sink (a)
Angle relative to velocity inlet (A)

**FIG. 8A**

800

Measure pressure, (P),
temperature (T),
Heat flux (H)

## Side view

Ambient temperature (T)

Base heat source (H_b)

**FIG. 8B**

**FIG. 9**

Europäisches
Patentamt

European
Patent Office

Office européen
des brevets

# EUROPEAN SEARCH REPORT

Application Number

EP 22 16 4215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/222129 A1 (SCHLUMBERGER TECHNOLOGY CORP [US]; SCHLUMBERGER CA LTD [CA] ET AL.) 21 November 2019 (2019-11-21) <br> * abstract * <br> * paragraph [0008] * <br> * paragraph [0010] * <br> * paragraph [0075] * <br> * paragraph [0084] – paragraph [0085] * <br> * paragraph [0087] * <br> * paragraph [0091] * <br> * paragraph [0105] * <br> * paragraph [0107] * <br> * figure 19 * <br> ----- | 1-13 | INV. <br> G06F30/20 <br><br> ADD. <br> G06F111/10 |
| A | BARSZCZ T ET AL: "Presentation of a virtual power plant environment and its application with combined first-principle and data-driven models intended for the diagnostics of a power plant – Part I", SIMULATION, XX, XX, <br> vol. 88, no. 2, <br> 1 February 2012 (2012-02-01), pages 139-166, XP009169907, <br> ISSN: 0037-5497, DOI: <br> 10.1177/0037549711398718 <br> * abstract * <br> * page 156, column 1, paragraph 1 * <br> * the whole document * <br> ----- | 1-13 | |

TECHNICAL FIELDS
SEARCHED      (IPC)

G06F
G06N

The present search report has been drawn up for all claims

| Place of search | Date of completion of the search | Examiner |
|---|---|---|
| Munich | 2 September 2022 | Sohrt, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 4215

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2022

| Patent document cited in search report | Publication date | Patent family member(s) | Publication date |
|---|---|---|---|
| WO 2019222129 A1 | 21-11-2019 | EP 3794215 A1 | 24-03-2021 |
| | | US 2021222552 A1 | 22-07-2021 |
| | | WO 2019222129 A1 | 21-11-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 874977

- US 10303825 B2